# EUROPEAN PATENT APPLICATION

(11) **EP 3 691 012 A1**
(43) Date of publication of application: **05.08.2020**
(21) Application number: 18860421.9
(22) Date of filing: 13.09.2018
(51) Int. Cl.: H01M 10/04

(54) **METHOD AND SYSTEM FOR EQUALIZING TEMPERATURE OF BATTERY MODULE, TEMPERATURE EQUALIZING BATTERY MODULE AND BATTERY PACK**

(30) Priority: 29.09.2017 CN 201710911759; 29.09.2017 CN 201721269882 U
(71) Applicant: Aiways Automobile Co., Ltd, Jiangxi 334000 (CN)
(72) Inventor: GU, Feng, Shanghai 200090 (CN)
(74) Representative: RGTH
(86) International application number: PCT/CN2018/105537
(87) International publication number: WO 2019/062554

(57) **Abstract**

The present disclosure provides a method and system for equalizing the temperature of a battery module, and a temperature equalizing battery module and Battery Pack. The method comprises the following steps: sequentially providing a first thermal pad and a temperature equalizing sheet on the bottom of a horizontally arranged battery module; providing a second thermal pad on the bottom of a vertically arranged battery module; determining whether temperature variations in the vertically arranged battery module and in the horizontally arranged battery module are consistent. If not, adjusting one or more parameters of the thickness and the thermal conductivity of the first thermal pad, the thickness and the temperature equalization coefficient of the temperature equalizing sheet, and the thickness and the thermal conductivity of the second thermal pad, until the temperature variations in the vertically arranged battery module and the horizontally arranged battery module are consistent.

## Description

### CROSS-REFERENCE FOR RELATED APPLICATIONS

The present application claims the priority of the Chinese patent application with the application number 201710911759.9, titled "Method and System for Equalizing Temperature of Battery Module, Temperature Equalizing Battery Module and Battery Pack" filed before the China Patent Office on September 29, 2017, the entire contents of which are incorporated by reference in the present application.

### TECHNICAL FIELD

The present disclosure relates to the technical field of battery module, particularly to a method and a system for equalizing temperature of a battery module, a temperature equalizing battery module and a Battery Pack.

### BACKGROUND

Electric vehicles refer to vehicles, which are powered by on-board power supplies, moved by driving wheel with electric motors, and meet the respective requirements of road traffic and safety regulations. Because of relatively low environmental impact compared to traditional vehicles, their prospects are widely considered optimistic. As a result of influence by driving habits for traditional vehicles, the requirements for long driving range of electric vehicles has gradually become the mainstream trend. For example, the maximum pure electric driving range of the long driving range version of the Tesla Model-S is nearly 500 kilometers, and the Volkswagen also announced that it will launch electric vehicles for more than 400km in the future.

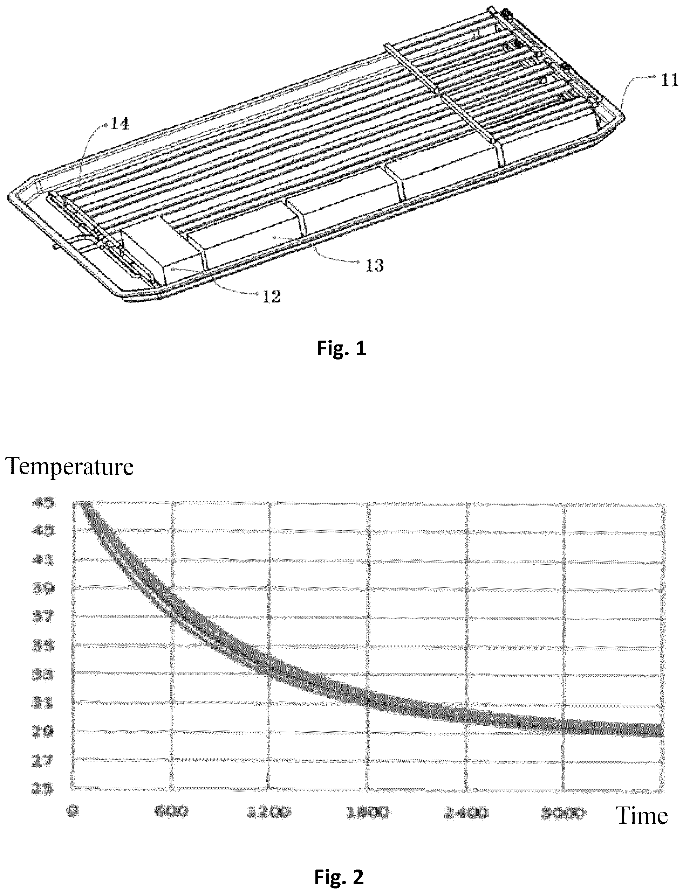

Electric vehicles provide kinetic energy through the Battery Pack used thereon. Usually, several battery modules connected in series or parallel are provided within the Battery Pack to obtain the required voltage and power. In order to meet the requirements of long driving range, the requirement for the energy density of the Battery Pack is getting higher and higher. It is necessary to place as many battery modules as possible within the Battery Pack envelope per unit volume. As the size of the battery modules becomes more and more standardized, the cost for changing the structure of the battery modules is relatively high. Therefore, in a limited envelope space of the Battery Pack, the battery modules are arranged in a vertically and horizontally interleaved manner to provide as many battery modules as possible, so as to achieve the optimal match of the envelope space of the Battery Pack and the number of the battery modules. As shown in Figure 1, a battery module 12 is horizontally arranged in the Battery Pack case 11, and battery modules 13 are vertically arranged. For rapid heat dissipation of the battery modules, a liquid cooling assembly 14 is also provided at the bottom of the case 11.

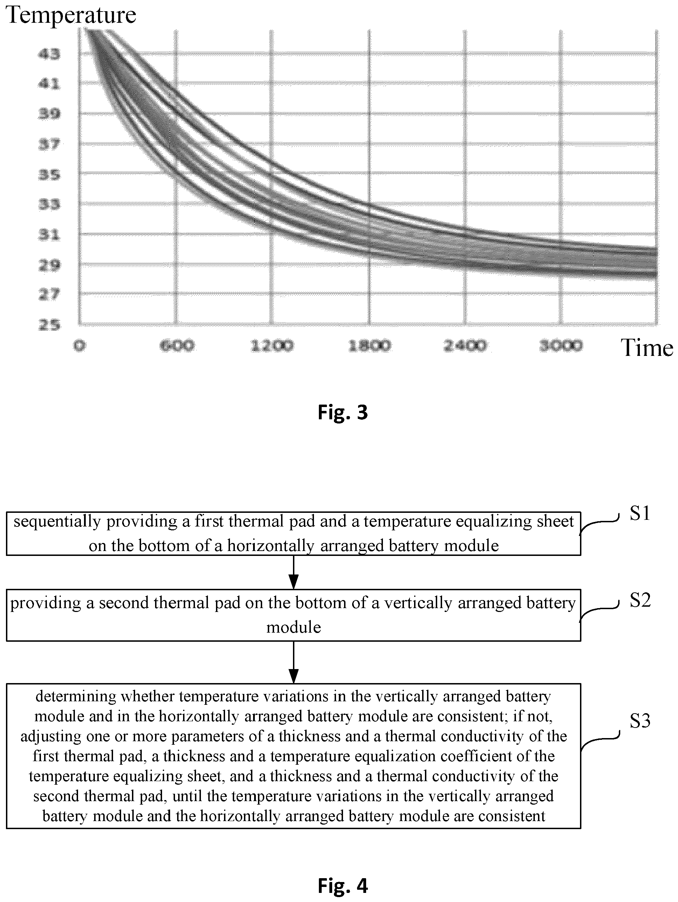

In the case of the initial temperature of 45°C, the ambient temperature of 45°C, and the water temperature of 25°C, excluding radiation, excluding air convection, and including heat conduction only, and the transient heating power of 2W of a single battery module, a water pipe is used to perform the first temperature decreasing simulation of the vertically arranged battery modules and the horizontally arranged battery modules. As shown in Figures 2 and 3, the temperature of a plurality of battery modules horizontally arranged is decreased more slowly and it takes about 2600s for the maximum temperature thereof to decrease to below 31°C while it only takes about 2000s for the maximum temperature of the plurality of battery modules vertically arranged to decrease to below 31°C; in the meantime, the maximum temperature difference between the horizontally arranged battery modules is 5.8°C while the maximum temperature difference between the vertically arranged battery modules is 1.6°C. As can thus be known, when there are battery modules arranged in different directions at the same time within one Battery Pack, the different temperature decreasing speeds of the battery modules in different directions may occur, which results in temperature difference between different battery modules; and the temperature of the horizontally arranged battery modules themselves will also be higher.

However, the temperature difference between the battery modules will reduce the cooling and heating efficiency of the Battery Pack, and cause a series of problems such as inconsistent battery attenuation and large errors of battery state estimation.

### SUMMARY

In view of the above-mentioned shortcomings of the prior art, the purpose of the present disclosure is to provide a method and a system for equalizing the temperature of a battery module, a temperature equalizing battery module and a Battery Pack, in which by providing a heat conducting component on the battery module bodies, temperature equalization between the battery module bodies arranged in different directions is achieved, and the temperature of the battery module bodies is decreased.

To achieve the above object and other related objects, the present disclosure provides a method for equalizing the temperature of a battery module, which includes the following steps: sequentially providing a first thermal pad and a temperature equalizing sheet on the bottom of a horizontally arranged battery module; providing a second thermal pad on the bottom of a vertically arranged battery module; determining whether temperature variations in the vertically arranged battery module and in the horizontally arranged battery module are consistent; if not, adjusting one or more parameters of the thickness and the thermal conductivity of the first thermal pad, the thickness and the temperature equalization coefficient of the temperature equalizing sheet, and the thickness and the thermal conductivity of the second thermal pad, until the temperature variations in the vertically arranged battery module and the horizontally arranged battery module are consistent.

In an embodiment of the present disclosure, the thicknesses of the first thermal pad and the second thermal pad are the same, and the thermal conductivities thereof are the same.

In an embodiment of the present disclosure, a pure aluminum sheet, a pure copper sheet or a graphite sheet is used as the temperature equalizing sheet.

In an embodiment of the present disclosure, a silicone pad is used as the first thermal pad and the second thermal pad.

Correspondingly, the present disclosure provides a system for equalizing the temperature of a battery module, which includes a first providing block, a second providing block and a determining and adjusting block;
the first providing block is configured to sequentially provide a first thermal pad and a temperature equalizing sheet on the bottom of a horizontally arranged battery module; the second providing block is configured to provide a second thermal pad on the bottom of a vertically arranged battery module;
the determining and adjusting block is configured to determine whether temperature variations in the vertically arranged battery module and in the horizontally arranged battery module are consistent; if not, adjusting one or more parameters of the thickness and the thermal conductivity of the first thermal pad, the thickness and the temperature equalization coefficient of the temperature equalizing sheet, and the thickness and the thermal conductivity of the second thermal pad until the temperature variations in the vertically arranged battery module and the horizontally arranged battery module are consistent.

Meanwhile, the present disclosure further provides a temperature equalizing battery module, which includes:
a horizontal battery module assembly, which includes a horizontally arranged battery module, a first thermal pad and a temperature equalizing sheet; wherein the first thermal pad and the temperature equalizing sheet are sequentially provided on the bottom of the horizontally arranged battery module;
a vertical battery module assembly, which includes a vertically arranged battery module and a second thermal pad; wherein the second thermal pad is provided on the bottom of the vertically arranged battery module;
wherein the thickness and the thermal conductivity of the first thermal pad, and the thickness and the temperature equalization coefficient of the temperature equalizing sheet match the thickness and the thermal conductivity of the second thermal pad, so that temperature variations in the vertically arranged battery module and in the horizontally arranged battery module are consistent.

In an embodiment of the present disclosure, the thicknesses of the first thermal pad and the second thermal pad are the same, and the thermal conductivities thereof are the same.

In an embodiment of the present disclosure, a pure aluminum sheet, a pure copper sheet or a graphite sheet is used as the temperature equalizing sheet.

In an embodiment of the present disclosure, a silicone pad is used as the first thermal pad and the second thermal pad.

At last, the present disclosure further provides a Battery Pack, which includes a Battery Pack case, several vertical battery module assemblies, several horizontal battery module assemblies and a liquid cooling assembly;
wherein the battery module and the liquid cooling assembly both are provided within the Battery Pack case;
wherein the battery module is provided on the liquid cooling assembly;
wherein the horizontal battery module assembly includes a horizontally arranged battery module, a first thermal pad and a temperature equalizing sheet; wherein the first thermal pad and the temperature equalizing sheet are sequentially provided on the bottom of the horizontally arranged battery module;
wherein the vertical battery module assembly includes a vertically arranged battery module and a second thermal pad; wherein the second thermal pad is provided on the bottom of the vertically arranged battery module;
wherein the thickness and the thermal conductivity of the first thermal pad, and the thickness and the temperature equalization coefficient of the temperature equalizing sheet match the thickness and the thermal conductivity of the second thermal pad, so that temperature variations in the vertically arranged battery module and in the horizontally arranged battery module are consistent.

As described above, the method and system for equalizing the temperature of a battery module, the temperature equalizing battery module and the Battery Pack of the present disclosure have the following beneficial effects:
(1) by providing a heat conducting component on the battery module bodies, the temperature uniformity between the battery module bodies arranged in different directions is achieved, and the temperature of the battery module bodies is decreased;
(2) the battery modules can be arranged in different directions according to the size of the space for the Battery Pack on the basis of the equalization of the temperature, thereby maximizing the use of the space for the Battery Pack and improving the energy density of the Battery Pack.

### BRIEF DESCRIPTION OF THE DRAWINGS

Figure 1 is a schematic structural diagram showing a Battery Pack in an embodiment in the prior art;
Figure 2 is a graph showing the maximum temperature variation of a plurality of battery modules arranged vertically under a first simulation condition;
Figure 3 is a graph showing the maximum temperature variation of a plurality of battery modules arranged horizontally under a first simulation condition;
Figure 4 is a flowchart showing a method for equalizing the temperature of a battery module in an embodiment of the present disclosure;
Figure 5 is a graph showing the maximum temperature variation of a plurality of battery modules arranged vertically under a second simulation condition;
Figure 6 is a graph showing the maximum temperature variation of a plurality of battery modules arranged horizontally under a second simulation condition;
Figure 7 is a graph showing the maximum temperature variation of a plurality of battery modules arranged vertically under a third simulation condition;
Figure 8 is a graph showing the maximum temperature variation of a plurality of battery modules arranged horizontally under a third simulation condition;
Figure 9 is a schematic structural diagram showing a system for equalizing the temperature of a battery module in an embodiment of the present disclosure;
Figure 10 is a schematic structural diagram showing a temperature equalizing battery module in an embodiment of the present disclosure.

### DESCRIPTION OF REFERENCE NUMERALS

- 11: Battery Pack case
- 12: horizontally arranged battery module
- 13: vertically arranged battery module
- 14: liquid cooling assembly
- 21: first providing block
- 22: second providing block
- 23: determining and adjusting block
- 31: horizontal battery module assembly
- 32: vertical battery module assembly

### DETAILED DESCRIPTION

In the following, the implementation of the present disclosure will be described by specific concrete embodiments, and those skilled in the art can easily understand other advantages and effects of the present disclosure from the contents disclosed in the present description.

It should be noted that the structure, proportion, size, etc. shown in the drawings of the present description are only used to match the contents disclosed in the description, for those skilled in the art to understand and read, not used to limit defining conditions on which the present disclosure can be implemented, and thus do not have a technically significant meaning. Any modification of the structure, change in the proportional relationship or adjustment of the size, without affecting the effectiveness, which can be generated by the present disclosure, and the purpose, which can be achieved by the present disclosure, all should still fall into the scopes, which can be covered by the technical contents disclosed by the present disclosure. In the meantime, the terms such as "upper", "lower", "left", "right", "middle", "a" and "one" cited in the present description are also only used to facilitate the understanding of the description and not used to define the scopes, which can be implemented by the present disclosure, and the change or adjustment of the relative relationship of which, without substantial changes in the technical contents, should also be regarded as the scopes, which can be implemented by the present disclosure.

The method and system for equalizing the temperature of a battery module, the temperature equalizing battery module and the Battery Pack of the present disclosure, by providing a heat conducting component on the battery module bodies, achieve the temperature uniformity between the battery module bodies arranged in different directions, and at the same time can decrease the temperature of the battery module bodies, so that the battery modules can be arranged in different directions according to the size of the space for the Battery Pack, thereby maximizing the use of the space for the Battery Pack and improving the energy density of the Battery Pack.

As shown in Figure 4, the method for equalizing the temperature of the battery modules of the present disclosure includes the following steps:
a step S1 of sequentially providing a first thermal pad and a temperature equalizing sheet on the bottom of a horizontally arranged battery module.
Specifically, the first thermal pad and the temperature equalizing sheet are sequentially provided on the bottom of the horizontally arranged battery module, so as to rapidly decrease the temperature of the horizontally arranged battery module.
Preferably, a silicone pad is used as the first thermal pad, and a pure aluminum sheet, a pure copper sheet or a graphite sheet is used as the temperature equalizing sheet.
a step S2 of providing a second thermal pad on the bottom of a vertically arranged battery module.
Preferably, a silicone pad is used as the second thermal pad.
a step S3 of determining whether temperature variations in the vertically arranged battery module and in the horizontally arranged battery module are consistent; if not, adjusting one or more parameters of the thickness and the thermal conductivity of the first thermal pad, the thickness and the temperature equalization coefficient of the temperature equalizing sheet, and the thickness and the thermal conductivity of the second thermal pad until the temperature variations in the vertically arranged battery module and the horizontally arranged battery module are consistent.

Specifically, firstly it is determined whether temperature variations in the vertically arranged battery module and in the horizontally arranged battery module are consistent under the current first thermal pad, temperature equalizing sheet and second thermal pad; if consistent, it shows that the equalization of the temperature of the vertically arranged battery module and the horizontally arranged battery module can be achieved; if not consistent, it needs to adjust one or more parameters of the first thermal pad, the temperature equalizing sheet and the second thermal pad and to determine again whether the temperature variations in the vertically arranged battery module and in the horizontally arranged battery module are consistent under the adjusted first thermal pad, temperature equalizing sheet and second thermal pad. This cycle will be repeated until the temperature variations in the vertically arranged battery module and in the horizontally arranged battery module are consistent. Thus, continuous determination and adjustment will be performed to finally achieve the equalization of the temperature of the vertically arranged battery module and the horizontally arranged battery module.

Preferably, the thicknesses of the first thermal pad and the second thermal pad are the same, and the thermal conductivities thereof are the same, so that the temperature uniformity can be achieved by changing the thicknesses of the first thermal pad, the temperature equalizing sheet and the second thermal pad, which simplifies the process and is easy to operate.

The method for equalizing the temperature of the battery module of the present disclosure will be explained below through a specific embodiment.

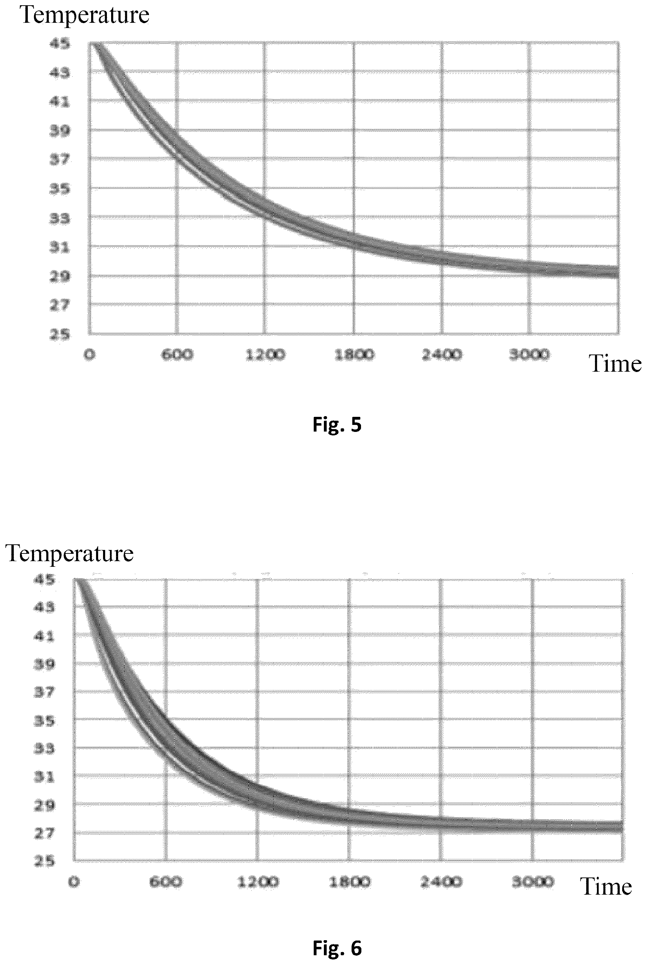

In the case of the initial temperature of 45°C, the ambient temperature of 45°C, and the water temperature of 25°C, excluding radiation, excluding air convection, and including heat conduction only, and the transient heating power of 2W of a single battery module, a first thermal pad after compression with a thickness of 0.8mm and the thermal conductivity of 3.0W/mK and one pure copper with a thickness of 1mm are provided once on the bottom of the horizontally arranged battery modules, and a second thermal pad after compression with a thickness of 0.9mm and the thermal conductivity of 1.5W/mK is provided on the bottom of the vertically arranged battery modules, and a water pipe is used to perform the second temperature decreasing simulation of the vertically arranged battery modules and the horizontally arranged battery modules at the same time. As shown in Figures 5 and 6, the temperature of a plurality of battery modules horizontally arranged is decreased more rapidly and it takes about 1100s for the maximum temperature thereof to decrease to below 31°C while it takes about 2000s for the maximum temperature of the plurality of battery modules vertically arranged to decrease to below 31°C; in the meantime, the maximum temperature difference between the horizontally arranged battery modules is 2.9°C while the maximum temperature difference between the vertically arranged battery modules is 1.6°C. It can be known from this simulation that, by providing the horizontally arranged battery module with a material with a higher thermal conductivity, the consistent speed of the temperature decreasing/temperature increasing of the vertically arranged battery module and the horizontally arranged battery module can be achieved, so that the temperature uniformity among the battery modules within the Battery Pack is achieved. In the meantime, the temperature difference between the horizontally arranged battery modules can also be improved. Though the temperature difference between the horizontally arranged battery modules is still larger than the temperature difference between the vertically arranged battery modules, the temperature difference can be controlled to a small range; in the meantime, within one battery module, the temperature difference due to placement can be easily equalized when cooling is closed, and has little effect on the temperature difference between the battery modules as whole. Wherein the pure copper of 1mm is used to achieve th function of temperature equalization and heat transfer strengthening.

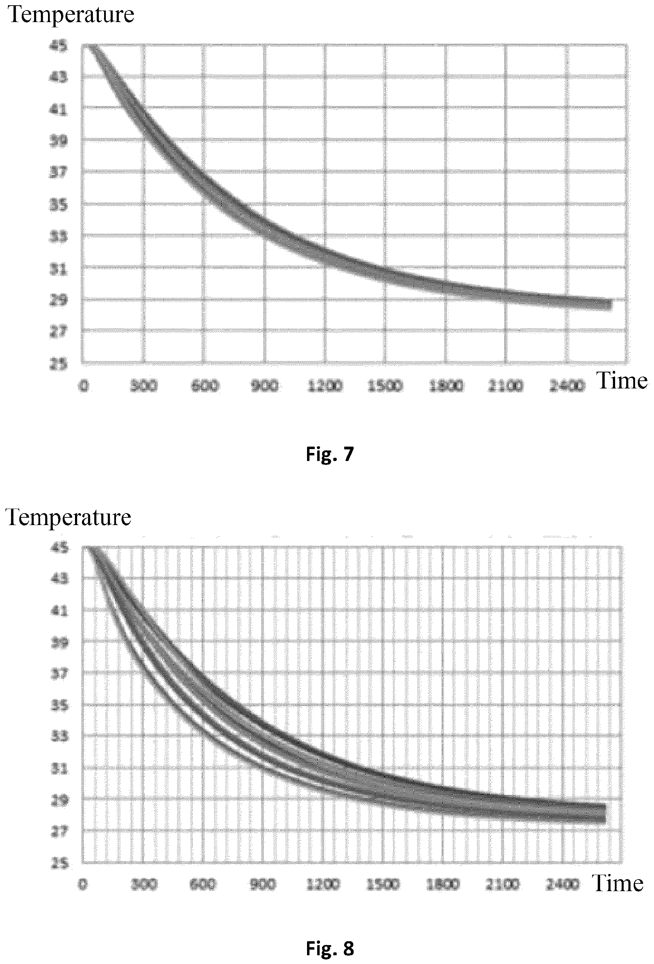

In the case of the initial temperature of 45°C, the ambient temperature of 45°C, and the water temperature of 25°C, excluding radiation, excluding air convection, and including heat conduction only, and the transient heating power of 2W of a single battery module, a first thermal pad after compression with a thickness of 0.9mm and the thermal conductivity of 0.5W/mK and one pure copper with a thickness of 1mm are provided once on the bottom of the horizontally arranged battery modules, and a second thermal pad after compression with a thickness of 0.9mm and the thermal conductivity of 2W/mK is provided on the bottom of the vertically arranged battery modules, and a water pipe is used to perform the third temperature decreasing simulation of the vertically arranged battery modules and the horizontally arranged battery modules at the same time. As shown in Figures 7 and 8, it takes about 1380^{∼}1430s for both the maximum temperatures of the plurality of battery modules vertically arranged and the plurality of battery modules horizontally arranged to decrease to below 31°C, and it takes about 2000s for the maximum temperature of the battery modules vertically arranged to decrease to below 31°C; in the meantime, the maximum temperature difference between the horizontally arranged battery modules is 3.9°C while the maximum temperature difference between the vertically arranged battery modules is 1.4°C.

**Table 1, temperature decreasing time and maximum temperature difference under three simulation conditions**

| | temperature decreasing time (temperature decreased to 31°C) | | maximum temperature difference | |
|---|---|---|---|---|
| | vertically arranged battery modules | horizontally arranged battery modules | vertically arranged battery modules | horizontally arranged battery modules |
| Simulation 1 | 2000s | 2600s | 1.6°C | 5.8°C |
| Simulation 2 | 2000s | 1100s | 1.6°C | 2.9°C |
| Simulation 3 | 1380^{∼}1430s | 1380^{∼}1430s | 1.4°C | 3.9°C |

As can be known from the above table, by adjusting one or more parameters of the thickness and the thermal conductivity of the first thermal pad, the thickness and the temperature equalization coefficient of the temperature equalizing sheet, and the thickness and the thermal conductivity of the second thermal pad for limited times, the temperature variations in the vertically arranged battery module and in the horizontally arranged battery module can be made consistent. The specific adjustment of the parameters is dependent on the factors such as the size, structure and the like of the power modules.

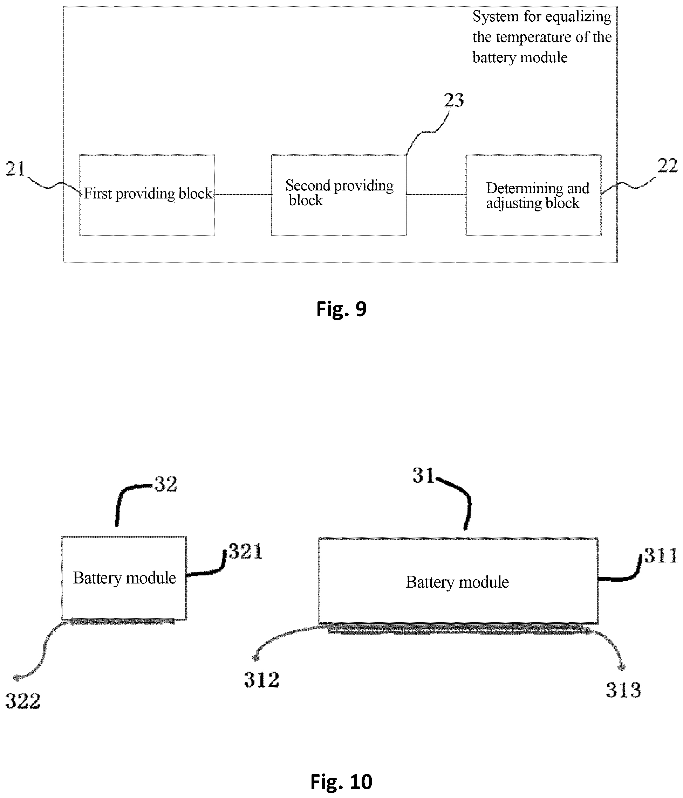

As shown in Figure 9, in an embodiment, the system for equalizing the temperature of the battery module of the present disclosure includes a first providing block 21, a second providing block 22 and a determining and adjusting block 23.

The first providing block 21 is configured to sequentially provide a first thermal pad and a temperature equalizing sheet on the bottom of a horizontally arranged battery module.

Specifically, the first thermal pad and the temperature equalizing sheet are sequentially provided on the bottom of the horizontally arranged battery modules, so as to rapidly decrease the temperature of the horizontally arranged battery modules.

Preferably, a silicone pad is used as the first thermal pad, and a pure aluminum sheet, a pure copper sheet or a graphite sheet is used as the temperature equalizing sheet.

The second providing block 22 is configured to provide a second thermal pad on the bottom of a vertically arranged battery module.

Preferably, a silicone pad is used as the second thermal pad.

The determining and adjusting block 23 is connected with the first providing block 21 and the second providing block 22, and configured to determine whether temperature variations in the vertically arranged battery module and in the horizontally arranged battery module are consistent; if not, adjusting one or more parameters of the thickness and the thermal conductivity of the first thermal pad, the thickness and the temperature equalization coefficient of the temperature equalizing sheet, and the thickness and the thermal conductivity of the second thermal pad until the temperature variations in the vertically arranged battery module and the horizontally arranged battery module are consistent.

Specifically, firstly it is determined whether temperature variations in the vertically arranged battery module and in the horizontally arranged battery module are consistent under the current first thermal pad, temperature equalizing sheet and second thermal pad; if consistent, it shows that the equalization of the temperature of the vertically arranged battery module and the horizontally arranged battery module can be achieved; if not consistent, it needs to adjust one or more parameters of the first thermal pad, the temperature equalizing sheet and the second thermal pad and to determine again whether the temperature variations in the vertically arranged battery module and in the horizontally arranged battery module are consistent under the adjusted first thermal pad, temperature equalizing sheet and second thermal pad. This cycle will be repeated until the temperature variations in the vertically arranged battery module and in the horizontally arranged battery module are consistent. Thus, continuous determination and adjustment will be performed to finally achieve the equalization of the temperature of the vertically arranged battery module and the horizontally arranged battery module.

Preferably, the thicknesses of the first thermal pad and the second thermal pad are the same, and the thermal conductivities thereof are the same, so that the temperature uniformity can be achieved by changing the thicknesses of the first thermal pad, the temperature equalizing sheet and the second thermal pad, which simplifies the process and is easy to operate.

As shown in Figure 10, in an embodiment, the temperature equalizing battery module of the present disclosure includes:
a horizontal battery module assembly 31, which includes a horizontally arranged battery module 311, a first thermal pad 312 and a temperature equalizing sheet 313;
wherein the first thermal pad 312 and the temperature equalizing sheet 313 are sequentially provided on the bottom of the horizontally arranged battery module 311.
a vertical battery module assembly 32, which includes a vertically arranged battery module 321 and a second thermal pad 322; wherein the second thermal pad 322 is provided on the bottom of the vertically arranged battery module 321.

The thickness and the thermal conductivity of the first thermal pad, and the thickness and the temperature equalization coefficient of the temperature equalizing sheet match the thickness and the thermal conductivity of the second thermal pad, so as to make temperature variations in the vertically arranged battery module and in the horizontally arranged battery module consistent.

In an embodiment of the present disclosure, a pure aluminum sheet, a pure copper sheet or a graphite sheet is used as the temperature equalizing sheet; and a silicone pad is used as the first thermal pad and the second thermal pad.

In an embodiment, the Battery Pack of the present disclosure includes a Battery Pack case, several horizontal battery module assemblies, several vertical battery module assemblies and a liquid cooling assembly.

The battery module and the liquid cooling assembly both are provided within the Battery Pack case.

The battery module is provided on the liquid cooling assembly.

The horizontal battery module assembly includes a horizontally arranged battery module, a first thermal pad and a temperature equalizing sheet; wherein the first thermal pad and the temperature equalizing sheet are sequentially provided on the bottom of the horizontally arranged battery module;
the vertical battery module assembly includes a vertically arranged battery module and a second thermal pad; wherein the second thermal pad is provided on the bottom of the vertically arranged battery module;
the thickness and the thermal conductivity of the first thermal pad, and the thickness and the temperature equalization coefficient of the temperature equalizing sheet match the thickness and the thermal conductivity of the second thermal pad, so as to make temperature variations in the vertically arranged battery module and in the horizontally arranged battery module consistent.

Preferably, a porous flat tube is used as the liquid cooling assembly.

To sum up, in the method and system for equalizing the temperature of a battery module, the temperature equalizing battery module and the Battery Pack of the present disclosure, by providing a heat conducting component on the battery module bodies, the temperature uniformity between the battery module bodies arranged in different directions is achieved, and the temperature of the battery module bodies is decreased; the battery modules can be arranged in different directions according to the size of the space for the Battery Pack on the basis of the equalization of the temperature, thereby maximizing the use of the space for the Battery Pack and improving the energy density of the Battery Pack. Therefore, the present disclosure effectively overcomes various shortcomings in the prior art and has high industrial utilization value.

The above described embodiments are merely illustrative of the principles and effects of the present disclosure, and are not intended to limit the present disclosure. Those skilled in the art can modify or change the above embodiments without departing from the spirit and scope of the present disclosure. Therefore, all equivalent modifications or changes made by those ordinarily skilled in the art without departing from the spirit and technical ideas disclosed by the present disclosure should still be covered by the claims of the present disclosure.

## Claims

1. A method for equalizing the temperature of a battery module, comprising:
sequentially providing a first thermal pad and a temperature equalizing sheet on the bottom of a horizontally arranged battery module;
providing a second thermal pad on the bottom of a vertically arranged battery module;
determining whether temperature variations in the vertically arranged battery module and in the horizontally arranged battery module are consistent; if not, adjusting one or more parameters of a thickness and a thermal conductivity of the first thermal pad, a thickness and a temperature equalization coefficient of the temperature equalizing sheet, and a thickness and a thermal conductivity of the second thermal pad, until the temperature variations in the vertically arranged battery module and the horizontally arranged battery module are consistent;
wherein a silicone pad is utilized as the first thermal pad and the second thermal pad, and a pure aluminum sheet, a pure copper sheet or a graphite sheet is utilized as the temperature equalizing sheet.

2. The method for equalizing the temperature of the battery module according to claim 1, **characterized in that**: the thickness of the first thermal pad and the thickness of the second thermal pad are the same, and the thermal conductivity of the first thermal pad and the thermal conductivity of the second thermal pad are the same.

3. A system for equalizing the temperature of a battery module, **characterized by** comprising a first providing block, a second providing block and a determining and adjusting block;
wherein the first providing block is configured to sequentially provide a first thermal pad and a temperature equalizing sheet on the bottom of a horizontally arranged battery module;
the second providing block is configured to provide a second thermal pad on the bottom of a vertically arranged battery module;
the determining and adjusting block is configured to determine whether temperature variations in the vertically arranged battery module and in the horizontally arranged battery module are consistent; if not, adjusting one or more parameters of a thickness and a thermal conductivity of the first thermal pad, a thickness and a temperature equalization coefficient of the temperature equalizing sheet, and a thickness and a thermal conductivity of the second thermal pad until the temperature variations in the vertically arranged battery module and the horizontally arranged battery module are consistent;
wherein a silicone pad is utilized as the first thermal pad and the second thermal pad, and a pure aluminum sheet, a pure copper sheet or a graphite sheet is utilized as the temperature equalizing sheet.
